# EUROPÄISCHE PATENTSCHRIFT

(11) **EP 0 864 448 B1**
(45) Veröffentlichungstag und Bekanntmachung des Hinweises auf die Patenterteilung: **14.01.2004**
(21) Anmeldenummer: 98103437.4
(22) Anmeldetag: 27.02.1998
(51) Int. Cl.: B60C 11/12, B29C 33/42

(54) **Fahrzeugreifen mit Einschnitten im Laufstreifen und Lamelle für Vulkanisationsform und Vulkanisationsform mit solchen Lamellen**
Vehicle tyre with incisions in tread and blade for vulcanization mould and vulcanization mould with such blades
Bandage pneumatique pour véhicule pourvu d'incisions dans le profil, lamelle pour le moule de vulcanisation et moule de vulcanisation avec de telles lamelles

(30) Priorität: 13.03.1997 DE 19710400
(43) Veröffentlichungstag der Anmeldung: 16.09.1998
(73) Patentinhaber: Continental Aktiengesellschaft, 30165 Hannover (DE)
(72) Erfinder: Rodewald, Helmut, 31249 Rötzum (DE); Mundl, Reinhard, Dr., 30539 Hannover (DE)

(56) Entgegenhaltungen:
- EP-A- 0 696 521
- US-A- 4 566 514
- US-A- 5 350 001

## Beschreibung

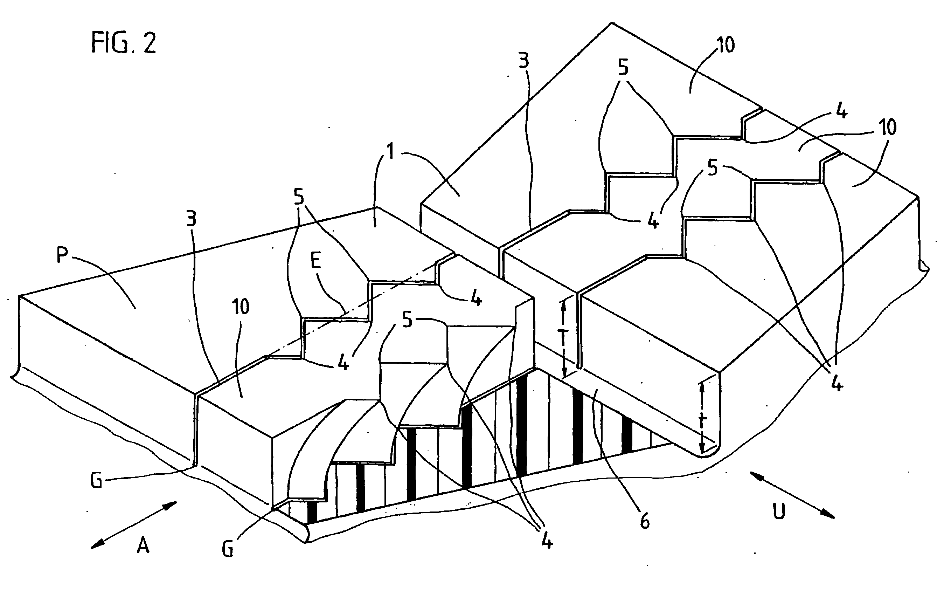

Die Erfindung betrifft einen Fahrzeugreifen gemäß dem Oberbegriff des Anspruches 1. Dieser weist Einschnitte im Laufstreifen auf, wobei die Einschnitte
a) in der Draufsicht zickzack- oder wellenförmig in einer Haupterstreckung verlaufen, die etwa in axialer Richtung des Fahrzeugreifens liegt,
b) wobei die Knickkanten bzw. Linien maximaler Krümmung in einer solchen zum Laufstreifen tangentialen Ansicht senkrecht zur besagten Haupterstreckung auf einen Steg, in der dieser Steg durch Entfernung des davor befindlichen Steges freigelegt ist (siehe Figur 2), alternierend als Berge und Täler erscheinen,
c) wobei diese Berge und Täler in besagter Ansicht um einen Winkel gegenüber der Radialen des Fahrzeugreifens geneigt sind und ununterbrochen und unverzweigt vom Einschnittgrund bis zur Reifenperipherie reichen.

Die "Haupterstreckung" der Einschnitte ist die Mittellinie zwischen der Verbindungslinie aller Wellenberge der Einschnitte zum einen und der Verbindungslinie aller Wellentäler der Einschnitte zum anderen in der Draufsicht. Vorzugsweise ist die Verbindungslinie der Wellenberge miteinander eine Gerade und auch die Verbindungslinie der Wellentäler miteinander; weiter bevorzugt sind beide Verbindungsgeraden zueinander parallel.

Die Worte "im wesentlichen in axialer Richtung" besagen, dass die Haupterstreckung um höchstens 45° zur Axialen geneigt ist. Besonders bevorzugt ist eine Neigung der Haupterstreckung der Einschnitte von der Axialen um 5° bis 20°.

Die Erfindung betrifft ferner gemäß dem Oberbegriff des Anspruches 11 Lamellen, die solche Einschnitte erzeugen und gemäß dem Oberbegriff des Anspruches 15 Vulkanisationsformen mit solchen Lamellen. Ohne die Herstellvorrichtungen gemäß den Ansprüchen 11 und 15 können bislang keine erfindungsgemäßen Reifen hergestellt werden.

Bei Reifen zum Einsatz auf winterlichen Straßen ist in den Positiven jeweils eine Anzahl von Einschnitten angeordnet, um die Griffigkeit des Laufstreifenprofiles zu verbessern. Das zwischen dicht beieinander stehenden Einschnitten stehen bleibende Gummi wird als "Steg" bezeichnet. Die Verbiegung eines Steges unter tangentialer Last führt auf Schnee und Eis zu einer Schrägstellung der - radial äußeren - Stegstirnfläche und somit zur Ausbildung einer Kante, die spikeähnlich die Griffigkeit auf solchen Untergründen verbessert.

Solche Reifen - Winterreifen oder Ganzjahresreifen - werden klimabedingt aber auch viel auf nassen und auf trockenen Straßen eingesetzt. Unter solchen Witterungsbedingungen - besonders auf trockenen Straßen - können diese Einschnitte auch Nachteile entfalten: Insbesondere kann die Verbiegung der Stegstirnflächen zu groß werden mit dem Ergebnis einer zu ungleichen Pressungsverteilung oder im Extremfall sogar einer Verminderung der Kontaktfläche durch partielles Abheben. Weil aber bei hohen Pressungen der Reibungsbeiwert p abnimmt, ist dann auch der über der Latschumrissfläche gemittelte Reibungsbeiwert verschlechtert.

Jeder Einschnitt erscheint in der Draufsicht aufgrund seiner geringen Dicke - gängig sind Dicken zwischen 0,7 und 1,1 mm - praktisch als ein Linienzug. Dieser Linienzug kann gerade, oder - wie bei der Erfindung - gewellt oder zickzack-förmig sein.

Zum flächigen Gebilde vervollständigt sind die üblichen Einschnitte durch Miterfassung eines jeden Punktes unterhalb jeden beliebigen Punktes des in der Draufsicht zu sehenden Linienzuges bis zu einer Einschnitttiefe, die in etwa der größten Umfangsrillentiefe - auch Dessintiefe genannt - entspricht. Jedem Knick des Linienzuges in der Draufsicht entspricht dann also eine gerade, in radialer Richtung verlaufende Einschnittkante.

Einschnitte verringern die Biegesteifigkeit der Positive, insbesondere gegenüber Kräften, die senkrecht zu diesen Einschnitten wirken. Demnach verringern zumindest im wesentlichen in axialer Richtung verlaufende Einschnitte insbesondere die Biegesteifigkeit der Profilelemente gegenüber Tangentialkräften in Längsrichtung.

FR-PS 791.250 lehrt einen - möglicherweise nie hergestellten - Fahrzeugreifen, dessen Laufstreifen Positive mit gewellten Einschnitten aufweist, deren Wellenberge und Wellentäler gerade Linien sind, die jedoch in der Querebene diagonal - also nicht radial, wie an den meisten Reifen - verlaufen. Die Schrägstellung der Wellenberge und -täler ist in der Weise getroffen, dass man beim Gehen in der Querebene entlang der Einschnitte nach radial außen, nach axial außen gelangt.

Aus der gattungsgemäßen DE-A 44 27 895 ist eine ähnliche Gestaltung, jedoch mit inverser Orientierung der Wellenberge und -täler bekannt, also so, dass man beim Gehen in der Querebene entlang der Einschnitte nach radial außen, nach axial innen gelangt. Durch diese Ausgestaltung der Einschnitte sollen die mögliche Bremsverzögerung auf feuchten und trockenen Straßen gesteigert und eine gute Quertraktion für Kurvenfahrt erzielt werden.

Diese beiden Schriften sind als nächstliegender Stand der Technik betrachtet.

Aus der EP-A 0 584 435 ist ein Reifen bekannt, dessen Profilelemente im Laufstreifen Einschnitte aufweisen, deren einander gegenüberliegende Wandbereiche durch vor- und rückspringende Kanten und Flächen so strukturiert sind, dass sie eine zumindest zum Teil voneinander abweichende dreidimensionale Struktur besitzen. Diese Struktur wird dadurch gebildet, dass die Wandbereiche überwiegend rückspringende Flächenelemente aufweisen, welche in einem spitzen Winkel zur Fahrfläche stehen, wobei bezüglich der Richtung des Einschnittverlaufes die rückspringenden Flächenelemente der einen Wand gegensinnig zu jenen der anderen Wand angeordnet sind. Durch derart gestaltete Einschnitte soll ein Teil der kinetischen Energie des schlupfenden Reifens über Reibung in Wärme umgewandelt und somit der Reifenschlupf vermindert werden.

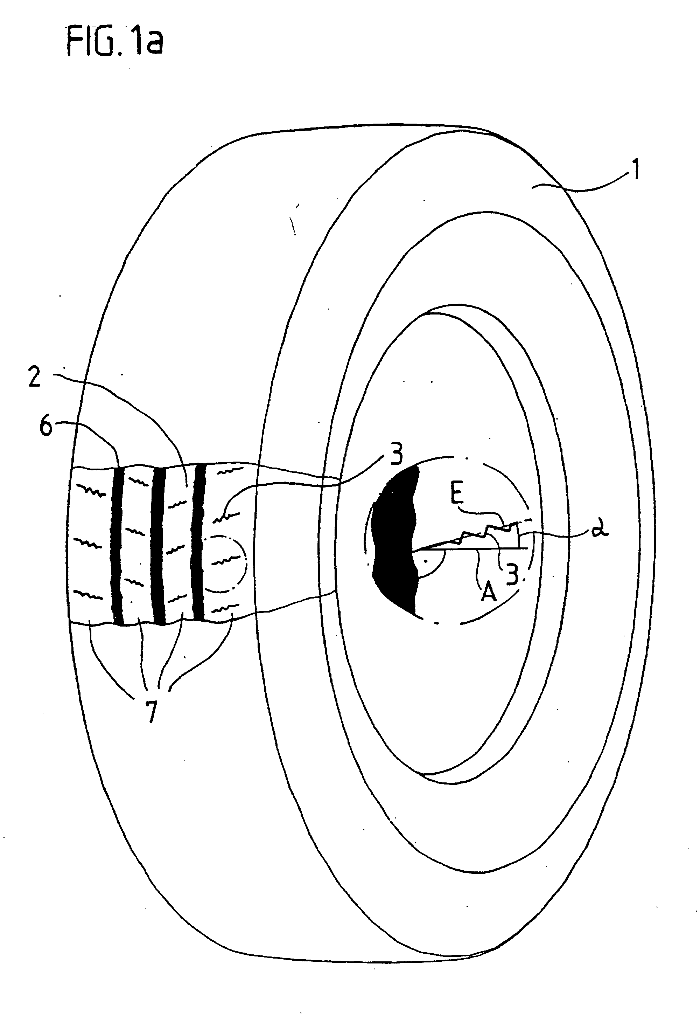

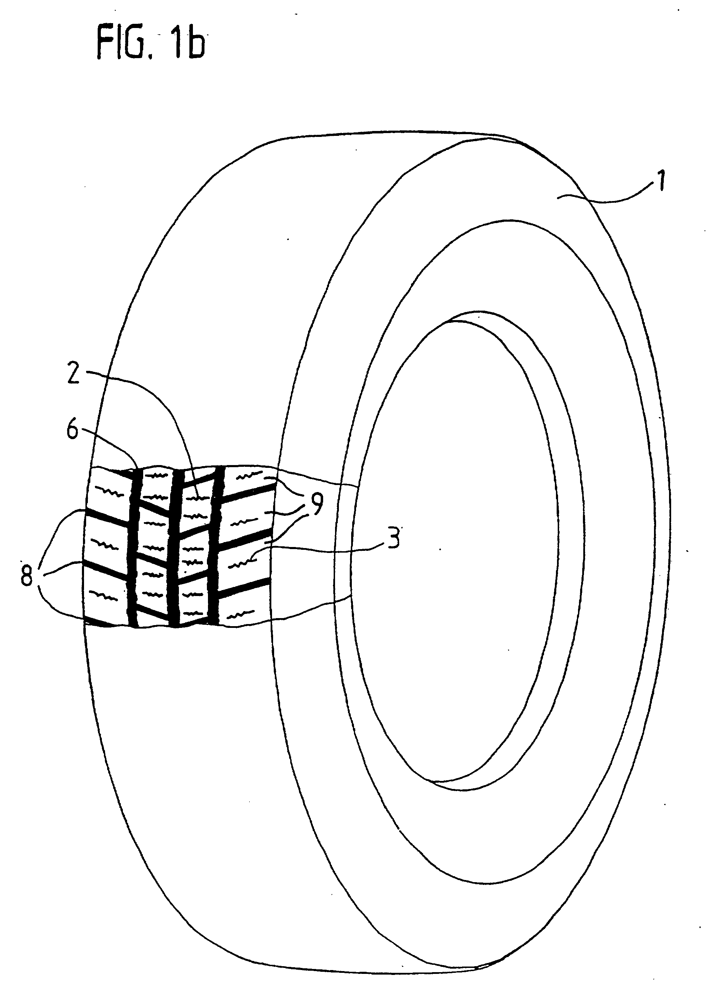

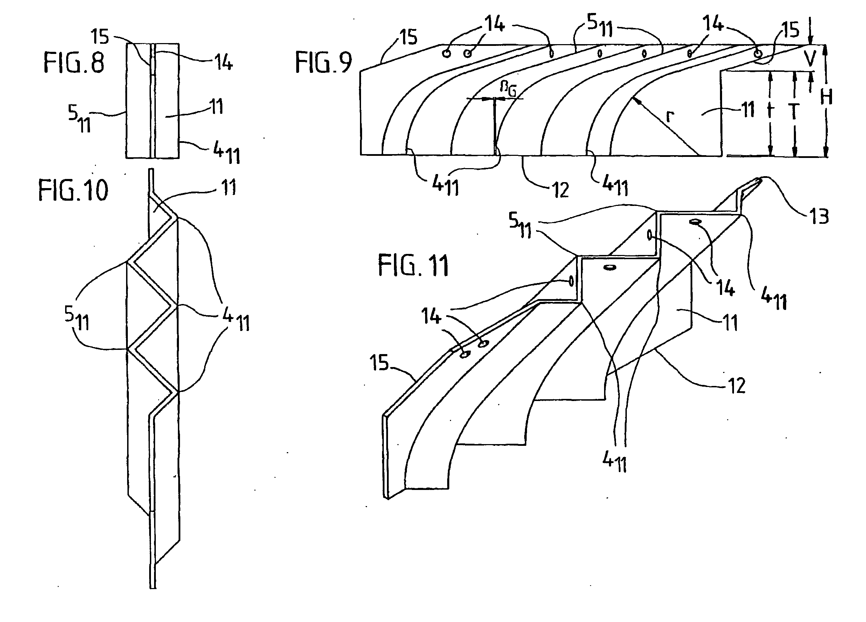

EP-PA 0 515 349 A1 lehrt durch Lamellen erzeugte, Einschnitte mit je einer Schar einander abwechselnder nicht-geradliniger Wellenberge und -täler, die ausweislich der Figur 2 vom Einschnittgrund bis zur Peripherie des Reifens fächerförmig geführt sind mit einer starken Krümmung der axial äußeren Berge und Täler und einer geringen Krümmung der mittleren Berge und Täler. Figur 1 zeigt eine wellenförmige Gestalt der Berge und Täler mit einer im wesentlichen axialen Ausrichtung. Die Figuren 8 und 9 zeigen eine wechselseitig Y-förmige Ausgestaltung der Wellenberge und -täler, also mit Verzweigungen in der Mitte der radialen Erstreckung.

Einschnitte, die - im Längsschnitt betrachtet - gekrümmt sind, sind beispielsweise aus der DE-A 41 07 547 bekannt. Die in dieser Druckschrift getroffene Ausgestaltung sieht vor, dass die Einschnitte sowohl an der Reifenprofiloberfläche als auch am Einschnittgrund zur Radialen unter einem Winkel verlaufen, wobei zwischen der Reifenprofiloberfläche und dem Einschnittgrunde eine Umkehrung der Neigung erfolgt. Dadurch soll eine verbesserte Anpassung der durch die Einschnitte geschaffenen Griffkanten an feine Strukturen im Untergrund erzielt werden.

Die WO 96/01190 lehrt ein Winterreifenprofil, das Profilpositive mit Einschnitten mit im wesentlichen axialer Haupterstreckung besitzt, die wellen- oder zickzack-förmig verlaufen. Ein solcher Einschnitt zeigt in jeder zur Laufflächenperipherie parallelen Schnittebene eine Achse, um die herum die wellen- bzw. zickzack-förmige freigelegte Schnittfläche des betreffenden Einschnittes beim Gehen entlang dieser Achse herum pendelt; desto tiefer die besagte Schnittebene gelegt ist, desto mehr soll die dort erkennbare Längsachse gegenüber der an der Peripherie erkennbaren verwunden sein.

Somit weisen diese Einschnitte Wellenberge und Wellentäler auf, die von der Radialen abweichend verlaufen. Die Schrägstellung dieser Wellenberge und -täler und ggf. deren Wölbung ist bei im wesentlichen axialer Blickrichtung auf den im wesentlichen quer verlaufenden Einschnitt zu sehen; beim Blick senkrecht dazu - also beim zum Laufstreifen tangentialen Blick senkrecht zu der Haupterstreckung der dort gezeigten Einschnitte und somit im wesentlichen in Umfangsrichtung - erscheinen die Wellenberge und -täler als Geraden. Diese vorbekannte Gestaltung soll die Griffigkeit erhöhen und den Abrieb verkleinern.

Bislang leiden Laufflächen daran, dass die Verbiegbarkeit der zwischen den Einschnitten stehen bleibenden Stege aus Gummi im Neuzustand des Reifens wegen der weit auskragenden Länge viel zu groß ist, im abgefahrenen Zustande etwas zu klein ist. Eine zu große Verbiegung der Stegstirnseiten macht die Pressungsverteilung in dieser Stirnfläche zu ungleichmäßig, kann sogar zum partiellen Abheben dieser Stirnflächen führen mit einher gehender Verschlechterung im Nass- und Trockenbremsen. Die Verbiegbarkeit hängt bekanntlich etwa von der dritten Potenz der auskragenden Länge ab, wobei diese auskragende Länge genau die Einschnitttiefe ist.

Der Erfindung liegt die Aufgabe zugrunde, in der Lauffläche zumindest über einen größeren Teil ihrer Lebensdauer sicherzustellen, dass die Profilsteifigkeit und die Griffigkeit annähernd konstant bleiben.

Die Aufgabe wird durch einen Fahrzeugreifen gemäß Anspruch 1 gelöst; dieser ist dadurch gekennzeichnet,
d) dass in besagter Ansicht auf besagten Steg - das heißt in einer Ansicht tangential zum Laufstreifen und senkrecht zur Haupterstreckung auf einen Steg, in der dieser Steg durch Entfernung des davor befindlichen Steges freigelegt ist - alle besagten Berge und Täler seiner Einschnitte monoton gekrümmt verlaufen,
e) wobei jeder Berg genauso gekrümmt ist wie alle anderen Berge des selben Einschnittes und jedes Tal genauso gekrümmt ist wie alle anderen Täler des selben Einschnittes,
f) wobei alle Berge und alle Täler so gekrümmt verlaufen, dass der Winkel zwischen den Bergen und Tälern einerseits und der Radialen andererseits an der Peripherie des Fahrzeugreifens größer ist als der entsprechende Winkel im Grunde besagter Einschnitte.

Bei erfindungsgemäß eingeschnittenen Positiven ist im Neuzustande des Reifens in Peripherienähe die Beweglichkeit der Positive durch die unter Tangentiallast sich einstellende Berührung und Abstützung der vorgebogenen Flächenelemente auf den rückgebogenen Flächenelementen auf der anderen Seite des selben Einschnittes stark eingeschränkt; diese erwünschte blockierende Wirkung nimmt aber nach radial innen hin ab, weil nach radial innen hin die - bei Blickrichtung senkrecht zur Einschnitthaupterstreckung auf einen aufgebrochenen Einschnitt erkennbaren - Berge und Täler sich der Radialen annähern.

Besagte radial innere Bereiche werden bei fortschreitendem Abrieb zur Reifenperipherie. Die Abnahme der oben erläuterten Verformungsblockade an der jeweiligen Peripherie beim Abriebfortschritt kompensiert weitgehend die bislang zunehmende Biegesteifigkeit der Einzelstege infolge der einhergehenden Verkürzung ihrer auskragenden Länge (=Steghöhe vom Einschnittgrund bis zur jeweiligen Peripherie). Die Verbiegung der Stegstirnflächen mit der einhergehenden Kantenausbildung bleibt daher bei fortschreitendem Abrieb etwa konstant. Damit ändert sich die Griffigkeit einer so eingeschnittenen Lauffläche über einem großen Bereich der Lebensdauer des Reifens kaum. Dies erhöht das erreichbare Sicherheitsniveau weiter.

Eine solche Lösung erschien zunächst unpraktikabel, weil dabei hingenommen werden müsste, dass die Entformbarkeit des Reifens aus der lamellenbestückten Vulkanisationsform erschwert wird und zwar umso mehr, desto ausgeprägter die erfindungsgemäße Wölbung ist. Es hat sich aber herausgestellt, dass die Erschwerung der Entformbarkeit insbesondere in Zusammenwirkung mit den Laufflächenmischungen für Winterreifen mit ihrer niedrigen Glasübergangstemperatur und niedrigen Härte in erträglichen Grenzen verbleibt.

Gemäß Anspruch 2 erscheinen die besagten Berge der Einschnitte in besagter Ansicht entlang der Haupterstreckung der Einschnitte (also im wesentlichen in axialer Richtung) auf einen freigelegten Steg vorzugsweise jeweils als eine Gerade. Eine Gekrümmtheit in dieser Ansicht hätte den Nachteil, dass die Entformbarkeit weiter erschwert würde, dies aber ohne weitere Verbesserung der Griffigkeit und deren Konstanthaltung über einem großen Abriebintervall. Überdies erlaubt die Geradlinigkeit eine engere räumliche Ineinanderschachtelung der Einschnitte und somit eine größere Anzahl von Einschnitten. Insoweit durch die Wahl der Schnittebene auch ein Tal sichtbar wird, sollte vorzugsweise auch dieses bei besagtem Blick entlang der Einschnitthaupterstreckung gerade erscheinen.

Weiter bevorzugt erscheinen gemäß Anspruch 3 alle Berge eines Einschnittes bei Ansicht entlang der Haupterstreckung des Einschnittes (also im wesentlichen in axialer Richtung) auf einen freigelegten Steg als eine einzige, gemeinsame Gerade. Analog sollten bei solcher Blickweise alle Täler dieses Einschnittes als eine - andere - gemeinsame Gerade erscheinen. Diese Weiterbildung hat den Vorteil, dass die Einschnitte dichter beieinander angeordnet werden können und somit die Einschnitt- und damit die Käntenanzahl vergrößert werden kann, was die Griffigkeit auf winterlichen Straßen erhöht.

Weiter bevorzugt erscheinen vorgenannte Berge bzw. Täler in besagter Ansicht entlang der Haupterstreckung des Einschnittes auf einen freigelegten Steg als eine jeweils radial verlaufende Gerade. Diese Weiterbildung gemäß Anspruch 4 führt zur leichteren Entformbarkeit des frisch geheizten Reifens aus seiner Vulkanisationsform mit ihren die Einschnitte im Fahrzeugreifen erzeugenden Lamellenblechen.

Gemäß einer bevorzugten Ausführung der Erfindung laut Anspruch 5 ändert sich die Neigung der Berge und Täler eines Einschnittes gegenüber der Radialen bis auf eine Tiefe, die bis zu 30 % der Dessintiefe beträgt, nur geringfügig. Hierdurch wird die Verformungsblockade bei weit abgefahrenem Reifen besonders klein. Dieser erwünschte Effekt wird weiter gesteigert, wenn gemäß Anspruch 6 die Berge und Täler eines Einschnittes in seinem Grunde zumindest im wesentlichen in radialer Richtung verlaufen.

Der Winkel, den ein jedes Flächenelemente zwischen einem Berg und einem benachbarten Tal in Peripherienähe mit der Radialen einschließt, sollte gemäß Anspruch 7 zwischen 30° und 80°, besonders bevorzugt zwischen 45° und 65°, betragen. In diesem Winkelbereich erreicht man im Bereich der Laufflächenperipherie des Neureifens eine hohe Verformungsblockade bei noch genügender Einschnittwirksamkeit gegenüber der Straße.

Um die optimale Wirkung der Einschnitte über der gesamten Lebensdauer des Reifens zu erzielen, sollten diese in an sich bekannter Weise gemäß Anspruch 8 eine Tiefe besitzen, die zumindest der größten Tiefe der Umfangsrillen entspricht. Besonders bevorzugt reichen die Einschnitte etwa 1mm tiefer als die Umfangsrillen; bei einer üblichen Profiltiefe (das heißt der Umfangsrillen) von 8 mm bei PKW-Reifen liegt also die günstigste Tiefe erfindungsgemäßer Einschnitte bei 9 mm.

Mindestens aber sollen erfindungsgemäße Einschnitte gemäß Anspruch 9 eine Tiefe von 80 % der Profiltiefe t haben, weil sonst ihre Vorteile so klein werden, dass sie in keinem günstigen Verhältnis mehr zum Aufwand stehen. Eine geringere Einschnitttiefe im Schulterbereich als im Laufflächenmittenbereich kann für das Brems- und Beschleunigungsverhalten sowie das Handling beim Kurvenfahren Vorteile zeigen. Auch kann so der Laufflächenabrieb über der Axialen vergleichmäßigt werden.

Erfindungsgemäße Einschnitte sind gemäß Anspruch 10 bevorzugt so im Laufstreifen angeordnet, dass ihre Einhüllenden etwa in radialer Richtung verlaufen. Mit "etwa in radialer Richtung" ist in diesem Zusammenhange gemeint, dass die Neigung der Einhüllenden zur Radialen höchstens 15°, besonders bevorzugt 0° bis 5° beträgt. Wie an sich die DE-OS 30 28 112 lehrt, kann die Orientierung der Einschnittneigung zur Radialen im Längsschnitt in den Schultern invers zu der im Mittenbereich sein; dabei sollte die Einschnittneigung im Längsschnitt umso größer sein, desto balliger die Laufflächenkontur im Querschnitt ist.

Die Herstellung erfindungsgemäßer Fahrzeugreifen erfordert eine Vulkanisationsform mit darin verankerten neuartigen Lamellen.

Diese neuartigen Lamellen sind in an sich bekannter Weise in der Draufsicht auf ihre dem zu fertigenden Reifen zugewandten Stirnseite zickzack- oder wellenförmig, wobei die Knickkanten bzw. Linien maximaler Krümmung in der Vorderansicht alternierend als Berge und Täler erscheinen, und wobei diese Berge und Täler in besagter Vorderansicht um einen Winkel gegenüber der Höhe der Lamelle geneigt sind. Gemäß Anspruch 15 sind diese Lamellen so in der Vulkanisationsform verankert, dass deren Höhe etwa (also um höchstens 15° geneigt gegenüber) der Radialen der Vulkanisationsform entspricht und die Blickrichtung auf die Seitenansicht der Lamelle im wesentlichen der axialen Richtung der Vulkanisationsform entspricht.

Diese neuartigen Lamellen sind dadurch gekennzeichnet, dass
d) alle besagten Berge und Täler in der Vorderansicht monoton gekrümmt verlaufen,
e) wobei jeder Berg genauso gekrümmt ist wie alle anderen Berge und jedes Tal genauso gekrümmt ist wie alle anderen Täler,
f) wobei alle Berge und Täler so gekrümmt verlaufen, dass der Winkel gegenüber der Höhe an der Wurzel der Lamelle größer ist als der Winkel an der dem Reifenrohling zugewandten Stirn der Lamelle.

Im Rahmen dieser Anmeldung wird "bogenförmig" oder "bogenförmig gekrümmt" als Synonym von "monoton gekrümmt" verstanden. Bei Entlangschreiten an einer monoton gekrümmten Kurve kann sich also der Krümmungsbetrag ändern, ein Vorzeichenwechsel der Krümmung (Wendepunkt) ist jedoch ausgeschlossen.

Die Lamellenbleche 4 zur Formung der erfindungsgemäßen Einschnitte 3 lassen sich nicht durch Blechbiegen erzeugen. Dagegen ist eine Herstellung durch Prägen ohne weiteres möglich. Um das etwaige Auftreten von Stauchspannungen beim Öffnen der Prägewerkzeuge zu vermeiden, kann es von Vorteil sein, die Zickzack-Amplitude in jenem Bereich, wo der Winkel β relativ groß wird, zu reduzieren. Dies schafft einen Ausgleich für die kürzere Wellenlänge im Wurzelbereich der Lamelle, der der Peripherie des herzustellenden Reifens entspricht.

Während sich die vorbekannten Lamellen mit geradlinigen Bergen und Tälern noch in einem einzigen Prägewerkzeug aus einem Blechrohling herstellen ließen, weil das Blech an den Bergen und Tälern lediglich zu biegen war, werden erfindungsgemäße Lamellen zweckmäßigerweise in mehreren nacheinander zu verwendenden Paaren von Prägewerkzeugen hergestellt. Wie an sich aus der Blechumformung komplizierter Massenteile wie Käfigen für Kugellager und Fahrradpedalen aus Blech bekannt, sollte für jeden Prägeschritt ein eigenes Paar von Prägewerkzeugen aus gehärtetem Ober- und Unterteil verwendet werden.

Läuft man dem Zickzack oder der Welle einer erfindungsgemäßen Lamelle in einer radial außen liegenden Axialen entlang, so wird dabei eine größere Bogenlänge zurückgelegt als wenn man dem Zickzack oder der Welle in einer radial innen liegenden Axialen entlang läuft; dabei bezieht sich die Ortsbestimmung "radial innen" und "radial außen" auf die Position im in die Vulkanisationsform eingebauten Zustande. Dieser Bogenlängenmehrbedarf radial außen kann durch eine dort längere Rohlingsbemessung gedeckt werden; zur Fertigung einer im Umriss rechteckigen erfindungsgemäßen Lamelle wäre also ein trapezförmiger Rohling zu verwenden und die längere der beiden parallelen Seiten des Rohlinges muss die radial äußere Kante der fertigen Lamelle, also deren Wurzel in der Vulkanisationsform, bilden. Dabei kommt es aber zu Stauchkräften in der Radialen und zu Scherkräften, die bei einschrittiger Prägung zu unerwünschten Ausbeulungen, also zusätzlichen Falten, führen können. Darum wird nach bisherigem Kenntnisstand eine mehrschrittige Prägung zur Herstellung erfindungsgemäßer Lamellen bevorzugt.

Die Prägung erfindungsgemäßer Lamellen scheint in besonders wenigen Prägeschritten möglich zu sein, wenn die an der Lamellenwurzel erforderliche größere Bogenlänge in der Axialen durch Streckung im besagten Bereich erreicht wird; um dennoch im besagten Bereich eine ausreichende Lamellendicke aufrecht zu erhalten, wird vorzugsweise ein Blechrohling mit ungleicher Blechdicke verwendet, nämlich mit größerer Dicke in dem Bereich, der an der fertigen Lamelle den Wurzelbereich bilden soll, als in dem Bereich, der - im eingebauten Zustande - nach radial innen weisen soll.

Die vorzugsweise so oder sonstwie hergestellten erfindungsgemäßen Lamellen schneiden beim Schließen der im Laufflächenbereich in der Regel radial geteilten Vulkanisationsform in den Laufstreifen ein und Hinterlassen nach dem Öffnen der Form erfindungsgemäße Einschnitte.

Angesichts dessen, dass ein moderner PKW-Winterreifen ca. 2.500 Einschnitte aufweist, ist es für den Hersteller der zugehörigen Vulkanisationsformen ein wesentlicher Vorteil, wenn ihm die Anlieferung und Vorratshaltung der zugehörigen Tausende von Lamellen durch deren dichte Stapelbarkeit erleichtert wird; auch aus diesem Grunde erscheinen vorzugsweise gemäß Anspruch 12 alle Berge und Täler einer erfindungsgemäßen Lamelle in der Seitenansicht als jeweils eine Gerade. Solche Lamellen erlauben zudem die Herstellung von Reifen gemäß Anspruch 2.

Die Herstellung von Reifen gemäß Anspruch 3 erfordert Lamellen gemäß Anspruch 13. Dabei liegen die - in der Ansicht in der Erstreckungsrichtung - vorzugsweise geraden Wellenberge und - täler in jeweils einer Flucht; es erscheinen also in der Seitenansicht alle Berge einer solchen Lamelle als eine einzige Gerade und alle Täler als eine - andere - einzige Gerade. Dies erleichtert die Stapelbarkeit noch weiter.

Gemäß Anspruch 14 liegt die Flucht der Wellenberge und -täler vorzugsweise parallel zur Höhe der Lamellen. Bei dieser bevorzugten Ausführungsform ist die Amplitude des Zickzacks bzw. der Wellung beim Gehen entlang einer Axialen also unabhängig davon, ob diese Axiale oben (in der Vulkanisationsform also radial außen) oder unten liegt.

Unter dem Gesichtspunkt der leichten Prägbarkeit in wenigen Schritten wäre es von Anspruch 14 abweichend besonders einfach, die Amplitude nach unten hin zu vergrößern.

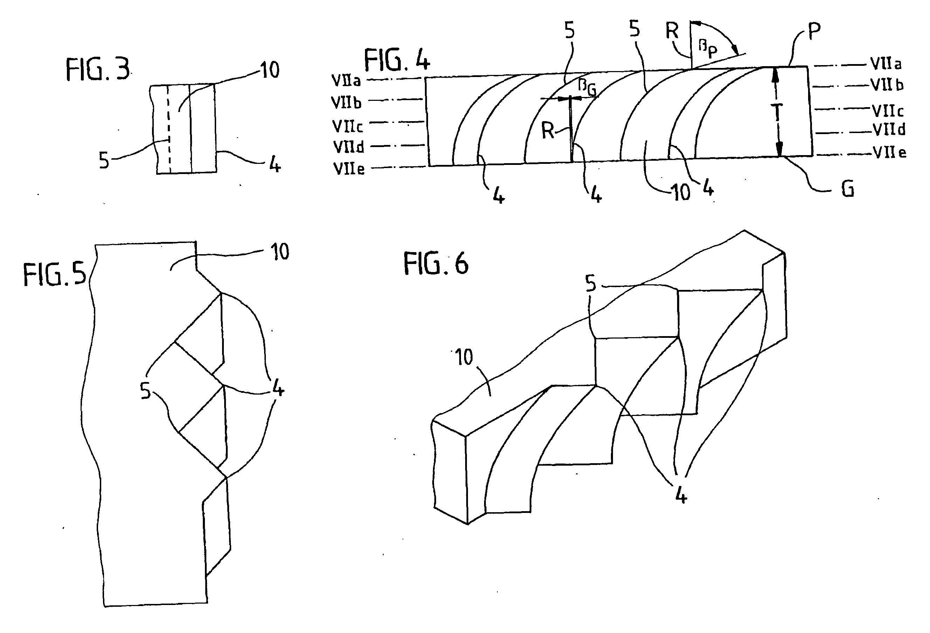

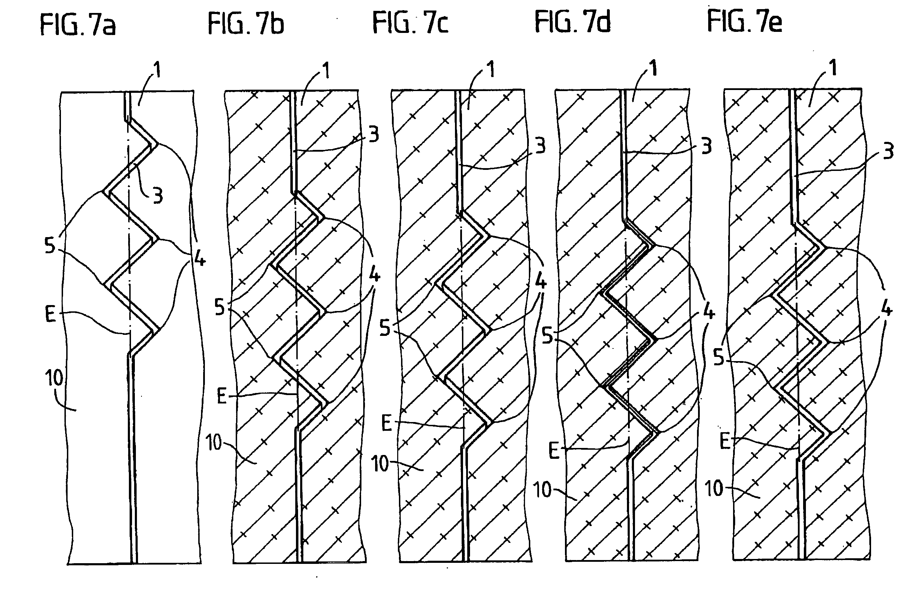

Weitere Vorteile und Einzelheiten der Erfindung werden nun anhand von maßstabsgerechten Figuren näher beschrieben. Es zeigt:
- **Fig. 1a**: in schräger, perspektivischer Ansicht einen erfindungsgemäßen Fahrzeugreifen mit Umfangsrippen und im wesentlichen quer verlaufenden Zickzack-Einschnitten darin,
- **Fig. 1b**: in analoger Ansicht einen ähnlichen Fahrzeugreifen mit zusätzlichen Querrillen,
- **Fig. 2**: in vergrößerter, schräger, perspektivischer Ansicht zwei versetzt nebeneinander befindliche Profilklötze aus dem Laufflächenmittenbereich eines Reifens nach Fig. 1b, wobei einer der Klötze entlang einem der erfindungsgemäß ausgeführten Einschnitte aufgeschnitten ist,
- **Fig. 3**: die Sicht in axialer Richtung (=Seitenansicht) auf den durch den Schnitt freigelegten Stegbereich,
- **Fig. 4**: die Sicht in der Umfangsrichtung (=Vorderansicht) auf den besagten Stegbereich,
- **Fig. 5**: die Sicht von oben in radialer Richtung (=Draufsicht) auf den besagten Stegbereich,
- **Fig. 6**: auf dem selben Blatt wie die maßstabsgleichen, aufeinander Bezug nehmenden Figuren 3 bis 5 die maßstabsgerechte räumliche Zusammensetzung der drei vorgenannten Ansichten in einer räumlich schrägen Ansicht [und damit gleich einem Auszug aus Fig. 2],
- **Figuren- folge 7a - 7e**: in gleichem Maßstabe wie die Figuren 3 bis 6 und in Analogie zur Figur 5, die Draufsicht auf zwei, an einen erfindungsgemäßen Einschnitt grenzende, Stegbereiche, die in den Figuren 7b bis 7e in zunehmender Tiefe - wie in Figur 4 angegeben - parallel zur Laufflächenperipherie abgeschnitten sind.
- **Fig. 8**: in gleichem Maßstabe wie die vorstehenden Figuren 3 bis 7 die Seitenansicht auf eine erfindungsgemäße Lamelle,
- **Fig. 9**: die zugehörige Vorderansicht auf die selbe Lamelle,
- **Fig. 10**: die zugehörige Draufsicht auf die selbe Lamelle und
- **Fig. 11**: auf dem selben Blatt wie die maßstabsgleichen, aufeinander Bezug nehmenden Figuren 8 bis 10 die maßstabsgerechte räumliche Zusammensetzung der drei vorgenannten Ansichten in einer räumlich schrägen Ansicht der Lamelle.

**Figur 1a** zeigt in schräger, perspektivischer Ansicht einen erfindungsgemäßen Fahrzeugreifen 1 mit einem Laufstreifen 2, in dem als Umfangsrippen 7 ausgebildete Positive durch Umfangsrillen 6 voneinander getrennt sind. In jeder der Umfangsrippen 7 sind Einschnitte 3 angeordnet, die in dieser Ansicht zickzack-förmig verlaufen, und deshalb auch Zickzack-Einschnitte 3 genannt werden.

Jeder Einschnitt 3 weist eine Haupterstreckung E auf, derentlang er im wesentlichen verläuft; zur Erläuterung der Begriffe "Haupterstreckung E" und der Worte "im wesentlichen" in diesem Zusammenhange" ist einer der Einschnitte 3 als vergrößerte Einzelheit im Bildzentrum dargestellt: Die Haupterstreckung E ist in dünner strichpunktierter Linie dargestellt und ist die Linie, von der aus der jeweilige Zickzack- oder Wellenverlauf des betreffenden Einschnittes 3 als eine periodische Funktion in Abhängigkeit von dem Weg entlang eben dieser Haupterstreckung dargestellt werden kann.

In diesem Ausführungsbeispiel verlaufen die Einschnitte in der Draufsicht im wesentlichen in einer Neigung Alpha von hier 15° zur Axialen A; dies heißt, dass die Haupterstreckungsrichtung E der Einschnitte 3 um 15° zur Axialen A geneigt ist. Der bezeichnete Winkel Alpha darf bis zu 45° betragen, liegt aber vorzugsweise zwischen 0° und 20°. Wenn der Winkel Alpha gleich 0° ist, ergibt sich die größte Wirksamkeit der Erfindung für die Griffigkeit selbst der Reifenlauffläche 2 und die Konstanz dieser Griffigkeit über der Reifenlebensdauer, allerdings auch der größte Beitrag zum Laufgeräusch. Weil das Griffigkeitsoptimum flach ist - das heißt, dass bei kleinem zunehmendem Winkel Alpha die Griffigkeit nur geringfügig abfällt - aber das Geräuschpessimum spitz - das heißt, dass schon bei kleinem zunehmendem Winkel Alpha der Geräuschbeitrag der Einschnitte steil sinkt, ist Alpha vorzugsweise größer 0, besonders bevorzugt zwischen 5° und 15°.

Figur 1b zeigt in zur Figur 1a analogen Ansicht einen ähnlichen Fahrzeugreifen 1; dieser jedoch weist im Laufstreifen 2 neben den Umfangsrillen 6 zusätzlich Querrillen 8 auf, wodurch die Positive zu Klötzen 9 aufgelöst sind. Zur Geräuschunterdrückung sind die Querrillen 8 in an sich bekannter Weise um 15° schräg zur Axialen gestellt. In den beiden Schulterklotzreihen befindet sich pro Klotz 9 ein erfindungsgemäßer Einschnitt 3, dessen Haupterstreckungsrichtung - wie schon im vorgenannten Ausführungsbeispiel nach Figur 1a - um 15° zur Axialen in der Draufsicht schräg gestellt ist. In den beiden mittleren Klotzreihen ist jedoch die Haupterstreckungsrichtung der Zickzack-Einschnitte 3 exakt axial gelegt; dies erleichtert die Zeichnung und das Verständnis der nachfolgenden, hierauf Bezug nehmenden Figuren und stellt überdies das Optimum für die erreichte Griffigkeit und deren Konstanz dar.

**Figur 2** zeigt in vergrößerter, schräger, perspektivischer Ansicht zwei versetzt nebeneinander befindliche Profilklötze 9 aus dem Mittenbereich der Lauffläche 2 eines Reifens 1 nach Figur 1b. Jeder dieser Klötze 9 weist zwei erfindungsgemäße Einschnitte 3 auf und ist dadurch in drei Stege 10 untergliedert. Von dem linken Klotz 9 ist der in Blickrichtung vordere Steg durch Abschneiden entlang der fett/dünnschraffierten Fläche entfernt, was den mittleren Steg 10 dieses Klotzes 9 zur Ansicht freilegt. Diese Freilegung dient natürlich nur der Sichtbarmachung der Erfindung; von einem zur Funktion bestimmten erfindungsgemäßen Fahrzeugreifen wird natürlich kein Steg entfernt.

Wie dargestellt, können die Einschnitte 3 an der Reifenperipherie den jeweiligen Profilklotz 9 über seine gesamte Breite durchqueren, sie könnten jedoch auch an einem oder beiden axialen Enden innerhalb des Klotzes 9 enden, also nicht in die entsprechende Umfangsnut 6 einmünden. Die Anzahl der Einschnitte 3 beträgt bei Profilelementen, die als Blöcke ausgestaltet sind, im allgemeinen zwischen eins und fünf, hier zwei.

Zur klaren Erkennung des wichtigsten Unterschiedes erfindungsgemäßer Einschnitte 3 zu vorbekannten Konstruktionen schaut man am besten senkrecht zur Einschnitt-Haupterstreckung E und tangential zur Lauffläche 2 auf die Berge 4 und Täler 5 der Einschnitte 3. Weil in den hier gezeigten mittleren Klötzen 9 die Einschnitt-Haupterstreckung E exakt einer Axialen A entspricht, ist die besagte Blickrichtung senkrecht zur Einschnitt-Haupterstreckung E und tangential zur Lauffläche 2 nichts anderes als die Umfangsrichtung U.

Die Figuren 3 bis 5 zeigen den in besagter Blickrichtung vorderen Bereich des mittleren Steges in der für technische Zeichnungen üblichen Zusammenstellung von drei aufeinander Bezug nehmenden Ansichten in allen drei aufeinander senkrecht stehenden Blickrichtungen. Dabei ist der gleiche Maßstab verwendet.

**Figur 3** zeigt die Sicht in axialer Richtung, also die Seitenansicht, auf den durch die - in Figur 2 gezeigte - Entfernung des vorderen Steges freigelegten vorderen Bereich des in Blickrichtung nächsten Steges 10. Rechts außen erscheint in diesem Bild der axial äußerste Wellenberg 4 dieses Klotzes 9. Entsprechend der bevorzugten Ausgestaltung nach den Ansprüchen 2 bis 4 liegen alle anderen Wellenberge 4 dieses Klotzes 9 im Schatten dahinter und erscheinen dadurch nicht. Links ist in gestrichelter Linie die Schar der ebenfalls hier genau axial hintereinander angeordneten Wellentäler 5 angegeben. Die Einhüllende eines Lamellenbleches zur Abformung eines solchen Einschnittes verläuft entlang der Wellenberge 4 und Wellentäler 5; beim hier gezeigten Ausführungsbeispiel sind beide einhüllenden Ebenen zueinander parallel und werden von einer exakten Axialen und einer exakten Radialen aufgespannt.

**Figur 4** zeigt die Sicht in der Umfangsrichtung, also die Vorderansicht auf den besagten freigelegten Bereich des Steges 10 und dort den Kern der Erfindung: Die Wellenberge 4 und die - täler 5 verlaufen nicht geradlinig sondern monoton gekrümmt, und zwar so gekrümmt, dass die Neigung βₚ der Berge 4 und Täler 5 zur Radialen R an der Laufflächenperipherie P größer ist als der entsprechende Winkel β_{g} im Grunde G der Einschnitte 3. Die Krümmung muss nicht, kann aber - wie hier gezeigt - über der Radialen konstant sein. Hier ist ein Krümmungsradius r von 104 % der Dessintiefe t gezeigt, um die Wölbung zu verdeutlichen; bevorzugt sind Krümmungsradien zwischen 110 % und 141 % von der Dessintiefe t.

Die Berge 4 und Täler 5 sind vorzugsweise so gebogen, dass sie an der Profilelementoberfläche gegenüber der Radialen R um einen Winkel βₚ zwischen 30° und 80°, insbesondere zwischen 45° und 65°, geneigt sind. Am radial inneren Ende, also im Einschnittgrund G, sollten die Berge 4 und Täler 5 in radialer Richtung verlaufen oder mit der Radialen einen Winkel β_{g} einschließen, der kleiner als βₚ ist, besonders bevorzugt bis zu 15° beträgt. Im Bereich dazwischen erfolgt eine stetige Änderung der Neigung. Über die ersten 2 bis 3 mm des auf die Radiale projezierten Verlaufes ändert sich die Neigung β nur wenig. Ausweislich Figur 4 beträgt in diesem Ausführungsbeispiel βₚ 74° und β_{g} 0°.

**Figur 5** zeigt die Sicht von oben in radialer Richtung, also die Draufsicht auf den besagten freigelegten Bereich des Steges 10. In der Draufsicht ist kein Unterschied zu der Gestaltung mit geradlinig schräg stehenden Wellenbergen 4 und - tälern 5 erkennbar.

**Figur 6** zeigt auf dem selben Blatt wie die vorgenannten, maßstabsgleichen, aufeinander Bezug nehmenden Figuren 3 bis 5 die maßstabsgerechte räumliche Zusammensetzung der drei vorgenannten Ansichten in einer räumlich schrägen Ansicht nach den Abbildungsregeln einer isometrischen Projektion. Dieser Auszug aus der zuvor beschriebenen Figur 2 ist hier nur zum besseren räumlichen Verständnis wiederholt.

Die erfindungsgemäße Ausgestaltung der Einschnitte 3 bewirkt eine Verkeilung und Abstützung korrespondierender Flächenelemente zu beiden Seiten eines jeden Einschnittes 3. Dies begrenzt infolge der starken Neigung besonders in den peripherie-nahen Bereichen die dem Gummi noch mögliche Relativbewegung zu beiden Seiten eines Einschnittes 3.

Diese Begrenzung von Gummibewegungen wirkt also besonders stark bei neuem, nicht abgefahrenem Laufstreifenprofil. Mit zunehmendem Laufstreifenabrieb erfolgt eine Verringerung der Verzahnungswirkung, wegen abnehmender Neigung der Berge 4 und Täler 5 zur Radialen, was einer ansonsten zu beklagenden Zunahme der Steifigkeit des Profilelementes entgegenwirkt. So wird über der Reifen-Lebensdauer auch bei fortschreitendem Abrieb eine gleichmäßige Ausbildung von Griffkanten durch im wesentlichen konstant bleibende Steifigkeit sichergestellt.

Die Figuren der Figurenfolge 7a - 7e zeigen in gleichem Maßstabe wie die Figuren 3 bis 6 und in gleicher Blickrichtung wie Figur 5 je eine zum gleichen Ausführungsbeispiel gehörige Draufsicht, jedoch nicht die Draufsicht auf einen einzigen, an einen erfindungsgemäßen Einschnitt angrenzenden Stegbereich (derweil der andere entfernt ist) sondern auf beide, an einen erfindungsgemäßen Einschnitt grenzende, Stegbereiche (derweil kein Stegbereich entfernt ist). Hierdurch wird die Gestalt des Einschnittes 3 besonders anschaulich.

**Figur 7a** zeigt in ungeschnittener Draufsicht einen zickzackförmigen Einschnitt 3. Das Zickzack pendelt um eine Haupterstreckung E hin und her, wobei diese Haupterstreckung in diesem Beispiel einer Axialen des erfindungsgemäß eingeschnittenen Reifens 1 entspricht. Die Blickrichtung der vorhergehenden Figuren entspricht der von rechts nach links auf diesem Zeichnungsblatte. Die drei Wellenberge 4 und zwei Wellentäler 5 befinden sich in dieser Ebene ziemlich weit axial innen, also oben auf diesem Blatte.

**Figur 7b** zeigt den gleichen Ausschnitt aus beiden Stegen 10 in gleicher Blickrichtung, jedoch als Draufsicht auf einen Schnitt in der zur Reifenperipherie parallelen Ebene VIIb-VIIb, wie sie in Figur 4 eingezeichnet ist. Bei unveränderter Haupterstreckung E und unverändertem Abstand in dieser Ebene der Wellenberge 4 und -täler 5 voneinander, sind die Wellenberge 4 und -täler 5 auf dem Zeichnungsblatte um einen großen Betrag nach unten verschoben, was einer Verschiebung nach axial außen, also von der Mitte des Reifens 1 weg, entspricht. Die durch Schraffur als Schnittfläche kenntlich gemachten Flächen werden zu Ansichtsflächen nach einem Abrieb von 25 % der Dessintiefe t, die in Figur 2 dargestellt ist.

**Figur 7c** zeigt den gleichen Ausschnitt aus beiden Stegen 10 in Draufsicht auf einen Schnitt in der zur Reifenperipherie parallelen Ebene VIIc-VIIc, wie sie in Figur 4 eingezeichnet ist. Bei unveränderter Haupterstreckung E und unverändertem Abstand in dieser Ebene der Wellenberge 4 und -täler 5 voneinander, sind die Wellenberge 4 und -täler 5 auf dem Zeichnungsblatte um einen weiteren Betrag nach unten verschoben, was einer Verschiebung nach axial außen, also von der Mitte des Reifens 1 weg, entspricht. Bei einer Geradlinigkeit der Wellenberge 4 und -täler 5 wäre der Verschiebebetrag zwischen den Figuren 7c und 7b der gleiche wie der zwischen den Figuren 7b und 7a; die Figurenfolge zeigt aber deutlich, dass dies tatsächlich nicht der Fall ist. Beim Fortschreiten in der Figurenfolge entsprechend einem Gehen in den Einschnitt 3 herein, also nach radial innen, ist zu erkennen, dass die zunehmende Verschiebung des Zickzacks nach axial außen um einen immer kleineren Betrag erfolgt. Diese Betragsabnahme liegt an der erfindungsgemäßen Krümmung der Wellenberge 4 und -täler 5. Die durch Schraffur in dieser Figur als Schnittfläche kenntlich gemachten Flächen werden zu Ansichtsflächen nach einem Abrieb von 50 % der Dessintiefe t.

**Figur 7d** zeigt den gleichen Ausschnitt aus beiden Stegen 10 in Draufsicht auf einen Schnitt in der zur Reifenperipherie parallelen Ebene VIId-VIId, wie sie in Figur 4 eingezeichnet ist. Bei unveränderter Haupterstreckung E und unverändertem Abstand in dieser Ebene der Wellenberge 4 und -täler 5 voneinander, sind die Wellenberge 4 und -täler 5 auf dem Zeichnungsblatte um einen weiteren, noch kleineren Betrag nach unten verschoben, was einer Verschiebung nach axial außen, also von der Mitte des Reifens 1 weg, entspricht. Die durch Schraffur in dieser Figur als Schnittfläche kenntlich gemachten Flächen werden zu Ansichtsflächen nach einem Abrieb von 75 % der Dessintiefe t.

**Figur 7e** zeigt den gleichen Ausschnitt aus beiden Stegen 10 in Draufsicht auf einen Schnitt in der zur Reifenperipherie parallelen Ebene VIIe-VIIe, wie sie in Figur 4 eingezeichnet ist. Bei unveränderter Haupterstreckung E und unverändertem Abstand in dieser Ebene der Wellenberge 4 und -täler 5 voneinander, sind die Wellenberge 4 und -täler 5 auf dem Blatte um einen weiteren, allerdings verschwindend kleinen Betrag nach unten verschoben, was einer Verschiebung nach axial außen, also von der Mitte des Reifens 1 weg, entspricht. Die durch Schraffur als Schnittfläche kenntlich gemachten Flächen werden zu Ansichtsflächen nach Abrieb der gesamten Dessintiefe t; ein so weit abgefahrener Reifen würde also als Negativ nur noch die - vorzugsweise verrundeten (wie in Figur 2 dargestellt) - Einschnittgründe zeigen.

Die erfindungsgemäßen Einschnitte 3 können im Bereich des in den Figuren 2 bis 7 gezeigten Zickzacks als eine Zusammensetzung von Flächenelementen aufgefasst werden, von denen ein jedes zwischen zwei benachbarten Zickzack-Kanten 4, 5 verläuft. Die besagten Flächenelemente sind nicht eben, wie bei zickzack-förmig gestalteten Einschnitten nach FR-PS 791.250 und DE-A 44 27 895, sondern gewölbt.

Zur Erleichterung des Verständnisses der erfindungsgemäßen Einschnittgestaltung und zur Darstellung einer erfindungsgemäßen Lamelle wird nachfolgend auf die in den Figuren 8 bis 11 dargestellten unterschiedlichen Ansichten eines Lamellenbleches 11, wie es in einer Vulkanisationsform zur Herstellung von erfindungsgemäßen Einschnitte 3 verwendet werden könnte, Bezug genommen. Die Figuren 8 bis 11 zeigen in gleichem Maßstabe wie die Figuren 3 bis 7 vier verschiedene Ansichten auf eine erfindungsgemäße Lamelle 11. Die Kanten des Lamellenbleches 11, die die als Berge 4 bezeichneten Kanten im zuvor dargestellten Einschnitt 3 darstellen, sind mit 4₁₁ bezeichnet und die Kanten des Lamellenbleches 11, die die als Täler 5 bezeichneten Kanten im zuvor dargestellten Einschnitt 3 darstellen, sind mit 5₁₁ bezeichnet.

**Figur 8** zeigt die Seitenansicht der erfindungsgemäßen Lamelle 11, Figur 9 die zugehörige Vorderansicht und Figur 10 die zugehörige Draufsicht. Figur 11 zeigt auf dem selben Blatte die maßstabsgerechte räumliche Zusammensetzung der drei vorgenannten Ansichten in einer räumlich schrägen Ansicht der Lamelle, nämlich in isometrischer Projektion analog den Figuren 2 und 6.

Wie insbesondere die Figuren 9 und 11 zeigen, verlaufen die Berge und Täler, hier also die Zickzack-Kanten 4₁₁ und 5₁₁ des Lamellenbleches 11 in der Ansicht in Umfangsrichtung nicht gerade sondern bogenförmig. Damit sind die jeweils zwischen einem Paar benachbarter Zickzack-Kanten 4₁₁ und 5₁₁ angeordneten Flächen gewölbt. Die Art und Bemessung der Bogenförmigkeit - hier jeweils ein Kreisbogen mit einem Radius r entsprechend 104 % der Dessintiefe t - ist vorzugsweise für alle Zickzack-Kanten 4₁₁ und 5₁₁ gleich gewählt, weil so eine besonders hohe Packungsdichte der Einschnitte 3 möglich ist.

In diesem Ausführungsbeispiel ist ein etwas kleinerer Radius r gewählt als eigentlich bevorzugt, weil so die Wölbung besonders deutlich wird; besonders bevorzugt ist ein Radius r zwischen 110 % und 141 % von der Dessintiefe t.

Die dargestellte Lamelle 11 soll mit dem in den Figuren oben dargestellten Bereich in einem Segment der Vulkanisationsform verankert werden. Zur weiteren Erhöhung der Ausreißfestigkeit ist in diesem Bereich einer Vielzahl von Löchern 14 vorgesehen, die dass Material der Vulkanisationsformsegmente bei deren Herstellung in einem Gießverfahren zu durchdringen vermag, sodass zusätzlich zum Reibschluss ein Formschluss aufgebaut wird.

Dieser Bereich des Lamellenbleches 11, auch Wurzelbereich genannt, der zur Verankerung im Formsegment dient, ist vorteilhafterweise - wie dargestellt - zu beiden Seiten hin mit je einer abgeschrägten Kante 15 begrenzt, die parallel (siehe Figur 9) zu den Wellenbergen 4₁₁ und -tälern 5₁₁ verläuft. Dazu sind die Wellenberge 4₁₁ und -täler 5₁₁ im Wurzelbereich geradlinig, also nicht gewölbt, ausgebildet; mit dieser Gestaltung des Wurzelbereiches ist für den Fall, dass mal die eine oder andere Lamelle einer Vulkanisationsform verschlissen sein sollte, auch ein Lamellenaustausch möglich. Das Ausreißen und Einsetzen würde ggf. in einer starken Neigung zur Radialen erfolgen, nämlich parallel zu den Wellenbergen 4₁₁ und -tälern 5₁₁ im Wurzelbereich, hier also in einer Neigung von 74°.

Die in diesen Figuren 8 bis 11 jeweils unten dargestellte Kante des Lamellenbleches 11 ist also dazu bestimmt, in den Kautschuk des Laufstreifens des Reifens einzudringen und den Einschnittgrund zu bilden. Im zu erstellenden Einschnittgrund ist die Neigung β der Wellenberge 4₁₁ und -täler 5₁₁ zur Radialen minimal, hier β_{G} gleich 0°.

Abweichend von der dargestellten Ausführungsform, wo die Wellenberge 4₁₁ und -täler 5₁₁ nahezu scharfkantig ausgeführt sind, was zu einem Gesamteindruck führt, der häufig auch als Zickzackgestalt angesprochen wird, können die Berge und Täler erfindungsgemäß ausgebildete Einschnitte 3 und Lamellen 11 auch stärker verrundet ausgeführt sein, was zu einem Gesamteindruck führt, der stärke an eine Welle erinnert, wie sie auf dem Wasser zu sehen ist. Zwischen "Welle" und "Zickzack" besteht im Rahmen dieser Anmeldung kein Unterschied ihrem Wesen nach, weil das Maß der Scharfkantigkeit bzw. Verrundung keinen Einfluss auf die Realisierbarkeit und die Vorteile der Erfindung hat.

Die folgende Bezugszeichenliste ist Bestandteil der Beschreibung.

### Bezugszeichenliste

- 1: Fahrzeugreifen
- 2: Laufstreifen
- 3: Einschnitte
- 4: Berge von 3
- 4₁₁: Berge in Lamelle 11 in der Vorderansicht
- 5: Täler von 3
- 5₁₁: Täler in Lamelle 11 in der Vorderansicht
- 6: Umfangsrille
- 7: Umfangsrippen
- 8: Querrillen
- 9: Profilklötze
- 10: Steg = Teil eines Positives zwischen zwei Einschnitten 3 oder zwischen einem Einschnitt 3 und einer Querrille
- 11: Lamelle, vorzugsweise aus Stahlblech, zum Einsatz in eine Vulkanisationsform zur Herstellung von 1
- 12: die im eingebauten Zustande dem Reifenrohling zugewandte Stirn einer jeden Lamelle 11
- 13: die dem Reifenrohling abgewandte Stirn einer jeden Lamelle = Wurzel der Lamelle 11, mit der sie in der Vulkanisationsform verankert wird
- 14: Befestigungsbohrung in der Wurzel der Lamelle 11
- 15: Schräge in der Wurzel der Lamelle 11

- A: Axiale
- E: Haupterstreckung eines Einschnittes 3 in Draufsicht
- G: Grund der Einschnitte 3
- H: Höhe der Lamelle 11
- P: Peripherie des Fahrzeugreifens 1
- R: Radiale des Fahrzeugreifens 1
- T: Einschnittiefe von 3
- U: Umfangsrichtung
- V: Verankerungstiefe von 11
- r: Radius von 4, 5, 4₁₁ und 5₁₁ in der Vorderansicht
- t: Dessintiefe von 2 = Größte Tiefe der Umfangsrillen 6
- β: der Winkel, um den 4 und 5 gegenüber R bzw. 4₁₁ und 5₁₁ gegenüber H geneigt sind; verschiedene Positionen über R bzw. H werden durch Index kenntlich gemacht, und zwar:
β_{g} Winkel β, den die Berge 4 und Täler 5 eines Einschnittes 3 im Grunde G des Einschnittes 3 mit der Radialen R einschließen bzw. den die Berge 4₁₁ und Täler 5₁₁ einer einschneidenden Lamelle 11 an ihrer dem Reifenrohling zugewandten Stirn 12 mit der Höhe H einschließen
βₚ Winkel β, den die Berge 4 und Täler 5 eines Einschnittes 3 an der Reifenperipherie P mit der Radialen R einschließen

## Patentansprüche

1. Fahrzeugreifen (1) mit Einschnitten (3) im Laufstreifen (2), wobei die Einschnitte (3)
a) in der Draufsicht zickzack- oder wellenförmig in einer Haupterstreckung (E) verlaufen, die etwa in axialer Richtung (A) des Fahrzeugreifens (1) liegt,
b) wobei die Knickkanten bzw. Linien maximaler Krümmung in einer solchen zum Laufstreifen (2) tangentialen Ansicht senkrecht zur besagten Haupterstreckung (E) auf einen Steg (10), in der dieser Steg (10) durch Entfernung des davor befindlichen Steges freigelegt ist, alternierend als Berge (4) und Täler (5) erscheinen,
c) wobei diese Berge (4) und Täler (5) in besagter Ansicht um einen Winkel (β) gegenüber der Radialen (R) des Fahrzeugreifens (1) geneigt sind und ununterbrochen und unverzweigt vom Einschnittgrund bis zur Reifenperipherie reichen,
**dadurch gekennzeichnet**,
d) dass in besagter Ansicht auf besagten Steg (10) alle besagten Berge (4) und Täler (5) seiner Einschnitte (3) monoton gekrümmt verlaufen,
e) wobei jeder Berg (4) genauso gekrümmt ist wie alle anderen Berge (4) des selben Einschnittes (3) und jedes Tal (5) genauso gekrümmt ist wie alle anderen Täler (5) des selben Einschnittes (3),
f) wobei alle Berge (4) und alle Täler (5) so gekrümmt verlaufen, dass der Winkel (βₚ) zwischen den Bergen (4) bzw. Tälern (5) einerseits und der Radialen (R) andererseits an der Peripherie (P) des Fahrzeugreifens (1) größer ist als der entsprechende Winkel (β_{g}) im Grunde (G) besagter Einschnitte (3).

2. Fahrzeugreifen nach Anspruch 1 **dadurch gekennzeichnet, dass** besagte Berge (4) und Täler (5) der Einschnitte (3) in besagter Ansicht entlang der Haupterstreckung (E) auf einen freigelegten Steg (10) jeweils als eine Gerade erscheinen.

3. Fahrzeugreifen nach Anspruch 2 **dadurch gekennzeichnet, dass** alle Berge (4) eines Einschnittes (3) in besagter Ansicht entlang der Haupterstreckung (E) auf einen freigelegten Steg (10) als eine einzige, gemeinsame Gerade erscheinen und all seine Täler (5) als eine - andere - einzige, gemeinsame Gerade erscheinen.

4. Fahrzeugreifen nach Anspruch 2, vorzugsweise nach Anspruch 3, **dadurch gekennzeichnet, dass** die Berge (4) der Einschnitte (3) in besagter Ansicht entlang der Haupterstreckung (E) auf einen freigelegten Steg (10) als radial verlaufende Geraden bzw. vorzugsweise als eine einzige radial verlaufende Gerade erscheinen und, dass die Täler (5) der Einschnitte (3) in der Ansicht in axialer Richtung auf den freigelegten Steg (10) als radial verlaufende Geraden bzw. vorzugsweise als eine einzige - andere -radial verlaufende Gerade erscheinen.

5. Fahrzeugreifen nach Anspruch 1, **dadurch gekennzeichnet, daß** sich die Neigung der Berge (4) und Täler (5) gegenüber der Radialen (R) bis auf eine Tiefe, die bis zu 30 % der Dessintiefe (t) beträgt, nur geringfügig ändert.

6. Fahrzeugreifen nach einem der Ansprüche 1 bis 3, **dadurch gekennzeichnet, daß** die Berge (4) und Täler (5) eines Einschnittes (3) im Einschnittgrund (G) zumindest im wesentlichen in radialer Richtung (R) verlaufen.

7. Fahrzeugreifen nach Anspruch 1 oder Anspruch 2, **dadurch gekennzeichnet, daß** der Winkel (βₚ), den die Berge (4) und Täler (5) an der Profilelementoberfläche mit der Radialen (R) einschließen, zwischen 30° und 80°, insbesondere zwischen 45° und 65°, beträgt.

8. Fahrzeugreifen nach einem der Ansprüche 1 bis 4, **dadurch gekennzeichnet, daß** die Einschnitte (3) bis auf eine Tiefe (T) reichen, die zumindest der Dessintiefe (t) [= maximale Tiefe der Umfangsrillen (6)] entspricht.

9. Fahrzeugreifen nach einem der Ansprüche 1 bis 4, **dadurch gekennzeichnet, daß** die Einschnitte (3) zumindest bis auf eine Tiefe reichen, die 80 % der Dessintiefe (t) entspricht.

10. Fahrzeugreifen nach einem der Ansprüche 1 bis 6, **dadurch gekennzeichnet, daß** die Einhüllenden der Einschnitte (3) etwa in radialer Richtung (R) verlaufen.

11. Lamelle (11) zum Einbau in eine Vulkanisationsform zur Herstellung eines Fahrzeugreifens (1) nach Anspruch 1,
a) wobei die Lamelle (11) in der Draufsicht auf ihre dem zu fertigenden Reifen (1) zugewandten Stirnseite (12) zickzack- oder wellenförmig ist,
b) wobei die Knickkanten bzw. Linien maximaler Krümmung in der Vorderansicht senkrecht zur Haupterstreckung der Lamelle (11) alternierend als Berge (4₁₁) und Täler (5₁₁) erscheinen,
c) wobei diese Berge (4₁₁) und Täler (5₁₁) in der Vorderansicht der Lamelle (11) um einen Winkel (β) gegenüber der Höhe (H) geneigt sind und ununterbrochen und unverzweigt von der dem Reifenrohling zugewandten Stirn (12) der Lamelle (11) bis zur Wurzel (13) der Lamelle (11) reichen,
**dadurch gekennzeichnet**,
d) dass alle besagten Berge (4₁₁) und Täler (5₁₁) in der Vorderansicht monoton gekrümmt verlaufen,
e) wobei jeder Berg (4₁₁) genauso gekrümmt ist wie alle anderen Berge (4₁₁) und jedes Tal (5₁₁) genauso gekrümmt ist wie alle anderen Täler (5₁₁),
f) wobei alle Berge (4₁₁) und alle Täler (5₁₁) so gekrümmt verlaufen, dass der Winkel (βₚ) gegenüber der Höhe (H) an der Wurzel (13) der Lamelle (11) größer ist als der Winkel (β_{g}) an der dem Reifenrohling zugewandten Stirn (12) der Lamelle (11).

12. Lamelle (11) nach Anspruch 11, zur Herstellung eines Fahrzeugreifens nach Anspruch 2, **dadurch gekennzeichnet, dass** in der Seitenansicht all ihre Berge (4₁₁) und Täler (5₁₁) als jeweils eine Gerade erscheinen.

13. Lamelle (11) nach Anspruch 12, zur Herstellung eines Fahrzeugreifens nach Anspruch 3, **dadurch gekennzeichnet, dass** in der Seitenansicht all ihre Berge (4₁₁) als eine einzige, gemeinsame Gerade erscheinen und all ihre Täler (5₁₁) ebenfalls als eine - andere - einzige, gemeinsame Gerade erscheinen.

14. Lamelle nach Anspruch 12, vorzugsweise nach Anspruch 13, **dadurch gekennzeichnet, dass** ihre Berge (4₁₁) in der Seitenansicht als entlang der Höhe (H) verlaufende Geraden bzw. vorzugsweise als eine einzige entlang der Höhe (H) verlaufende Gerade erscheinen und, dass ihre Täler (5₁₁) in der Seitenansicht als entlang der Höhe (H) verlaufende Geraden bzw. vorzugsweise als eine einzige - andere - entlang der Höhe (H) verlaufende Gerade erscheinen.

15. Vulkanisationsform mit Lamellen (11) gemäß Anspruch 11, **dadurch gekennzeichnet, dass** die Lamellen (11) so in ihr verankert sind, dass deren Höhe (H) etwa der Radialen (R) der Vulkanisationsform entspricht und die Blickrichtung auf die Seitenansicht der Lamelle (11) im wesentlichen der axialen Richtung der Vulkanisationsform entspricht.

## Claims

1. Vehicle tyre (1) having incisions (3) in the tread strip (2), wherein the incisions (3)
a) extend in a main extension (E) in a zig-zag-like or undulatory manner, when viewed from above, said extension lying substantially in the axial direction (A) of the vehicle tyre (1),
b) wherein the bent edges, or respectively lines of maximum curvature, appear alternately as peaks (4) and troughs (5) in such a plan view of a web (10), which view is tangential relative to the tread strip (2), perpendicular to said main extension (E), in which extension this web (10) is exposed by the removal of the web situated therebefore,
c) wherein, in said view, these peaks (4) and troughs (5) are inclined through an angle (β) relative to the radial (R) of the vehicle tyre (1) and extend in an uninterrupted and unbranched manner from the incision base to the tyre periphery,
**characterised in that**
d) in said plan view of said web (10), all of said peaks (4) and troughs (5) of its incisions (3) extend in a monotonically curved manner,
e) wherein each peak (4) is curved in exactly the same manner as all of the other peaks (4) of the same incision (3), and each trough (5) is curved in exactly the same manner as all of the other troughs (5) of the same incision (3), and
f) wherein all of the peaks (4) and all of the troughs (5) extend in such a curved manner that the angle (βₚ) between the peaks (4) and troughs (5) respectively, on the one hand, and the radial (R), on the other hand, is greater at the periphery (P) of the vehicle tyre (1) than the corresponding angle (β_{g}) in the base (G) of said incisions (3).

2. Vehicle tyre according to claim 1, **characterised in that**, in said plan view of an exposed web (10) taken along the main extension (E), said peaks (4) and troughs (5) of the incisions (3) each appear as a straight line.

3. Vehicle tyre according to claim 2, **characterised in that**, in said plan view of an exposed web (10) taken along the main extension (E), all of the peaks (4) of an incision (3) appear as a single, common straight line, and all of its troughs (5) appear as a - different - single, common straight line.

4. Vehicle tyre according to claim 2, preferably according to claim 3, **characterised in that**, in said plan view of an exposed web (10) taken along the main extension (E), the peaks (4) of the incisions (3) appear as radially extending straight lines or respectively preferably as a single radially extending straight line, and **in that**, in the plan view of the exposed web (10) taken in the axial direction, the troughs (5) of the incisions (3) appear as radially extending straight lines or respectively preferably as a single - different - radially extending straight line.

5. Vehicle tyre according to claim 1, **characterised in that** the inclination of the peaks (4) and troughs (5) relative to the radial (R) only changes slightly to a depth which is up to 30 % of the pattern depth (t).

6. Vehicle tyre according to one of claims 1 to 3, **characterised in that** the peaks (4) and troughs (5) of an incision (3) extend in the incision base (G) at least substantially in the radial direction (R).

7. Vehicle tyre according to claim 1 or claim 2, **characterised in that** the angle (βₚ), which the peaks (4) and troughs (5) form with the radial (R) on the profile element surface, is between 30° and 80°, more especially between 45° and 65°.

8. Vehicle tyre according to one of claims 1 to 4, **characterised in that** the incisions (3) extend to a depth (T), which corresponds to at least the pattern depth (t) [= maximum depth of the circumferential grooves (6)].

9. Vehicle tyre according to one of claims 1 to 4, **characterised in that** the incisions (3) extend at least to a depth which corresponds to 80% of the pattern depth (t).

10. Vehicle tyre according to one of claims 1 to 6, **characterised in that** the envelopes of the incisions (3) extend substantially in the radial direction (R).

11. Lamella (11) for insertion in a vulcanisation mould to produce a vehicle tyre (1) according to claim 1,
a) wherein, in the plan view of its end face (12) facing the tyre (1) to be manufactured, the lamella (11) is zig-zag-shaped or undulatory,
b) wherein, in the front elevational view perpendicular to the main extension of the lamella (11), the bent edges or respectively lines of maximum curvature appear alternately as peaks (4₁₁) and troughs (5₁₁),
c) wherein, in the front elevational view of the lamella (11), these peaks (4₁₁) and troughs (5₁₁) are inclined through an angle (β) relative to the height (H) and extend in an uninterrupted and unbranched manner from the front (12) of the lamella (11), facing the tyre blank, to the base (13) of the lamella (11),
**characterised in that**
d) in the front elevational view, all of said peaks (4₁₁) and troughs (5₁₁) extend in a monotonically curved manner,
e) wherein each peak (4₁₁) is curved in exactly the same manner as all of the other peaks (4₁₁), and each trough (5₁₁) is curved in exactly the same manner as all of the other troughs (5₁₁),
f) wherein all of the peaks (4₁₁) and all of the troughs (5₁₁) extend in such a curved manner that the angle (βₚ) relative to the height (H) at the base (13) of the lamella (11) is greater than the angle (β_{g}) at the front (12) of the lamella (11 ) facing the tyre blank.

12. Lamella (11) according to claim 11, for producing a vehicle tyre according to claim 2, **characterised in that**, in the side elevational view, all of its peaks (4₁₁) and troughs (5₁₁) each appear as a straight line.

13. Lamella (11) according to claim 12, for producing a vehicle tyre according to claim 3, **characterised in that**, in the side elevational view, all of its peaks (4₁₁) appear as a single, common straight line, and all of its troughs (5₁₁) also appear as a - different - single, common straight line.

14. Lamella according to claim 12, preferably according to claim 13, **characterised in that**, in the side elevational view, its peaks (4₁₁) appear as straight lines extending along the height (H) or respectively preferably appear as a single straight line extending along the height (H), and **in that**, in the side elevational view, its troughs (5₁₁) appear as straight lines extending along the height (H) or respectively appear preferably as a single - different - straight line extending along the height (H).

15. Vulcanisation mould with lamellae (11) according to claim 11, **characterised in that** the lamellae (11) are so secured in said mould that their height (H) corresponds substantially to the radial (R) of the vulcanisation mould, and the viewing direction onto the side elevational view of the lamella (11) corresponds substantially to the axial direction of the vulcanisation mould.

## Revendications

1. Pneumatique de véhicule (1) comportant des entailles (3) dans la bande de roulement (2), où les entailles (3)
a) sur la vue de dessus, s'étendent, dans un profil principal (E), en forme de zigzag ou en forme d'onde, lequel profil principal se trouve à peu près dans la direction axiale (A) du pneumatique de véhicule (1),
b) où les arêtes coudées ou les lignes de courbure maximum, dans une telle vue tangentielle à la bande de roulement (2), perpendiculaire audit profil principal (E) sur une nervure (10), profil principal dans lequel cette nervure (10) est dégagée par la suppression de la nervure placée devant, apparaissent de façon alternée comme des crêtes (4) et des vallées (5) ,
c) où ces crêtes (4) et ces vallées (5), sur ladite vue, sont inclinées suivant un angle (β) par rapport à la radiale (R) du pneumatique de véhicule (1) et vont, de manière ininterrompue et linéaire, depuis le fond de l'entaille jusqu'à la périphérie du pneumatique,
**caractérisé**
d) en ce que, sur ladite vue sur ladite nervure (10), toutes lesdites crêtes (4) et toutes lesdites vallées (5) de ses entailles (3) s'étendent en étant courbées de manière uniforme,
e) où chaque crête (4) est courbée exactement comme toutes les autres crêtes (4) de la même entaille (3) et chaque vallée (5) est courbée exactement comme toutes les autres vallées (5) de la même entaille (3) ,
f) où toutes les crêtes (4) et toutes les vallées (5) s'étendent en étant courbées de manière telle, que l'angle (βₚ) entre les crêtes (4) ou les vallées (5) d'une part, et la radiale (R) d'autre part, à la périphérie (P) du pneumatique de véhicule (1), est plus grand que l'angle correspondant (β_{g}) au fond (G) desdites entailles (3).

2. Pneumatique de véhicule selon la revendication 1, **caractérisé en ce que** lesdites crêtes (4) et lesdites vallées (5) des entailles (3), sur ladite vue le long du profil principal (E) sur une nervure dégagée (10), apparaissent à chaque fois comme une ligne droite.

3. Pneumatique de véhicule selon la revendication 2, **caractérisé en ce que** toutes les crêtes (4) d'une entaille (3), sur ladite vue le long du profil principal (E) sur une nervure dégagée (10)', apparaissent comme une unique ligne droite commune, et toutes ses vallées (5) apparaissent comme une autre unique ligne droite commune.

4. Pneumatique de véhicule selon la revendication 2, de préférence selon la revendication 3, **caractérisé en ce que** les crêtes (4) des entailles (3), sur ladite vue le long du profil principal (E) sur une nervure dégagée (10), apparaissent comme des lignes droites s'étendant radialement ou, de préférence, comme une unique ligne droite s'étendant radialement, et **en ce que** les vallées (5) des entailles (3), sur la vue en direction axiale sur la nervure dégagée (10), apparaissent comme des lignes droites s'étendant radialement ou, de préférence, comme une autre unique ligne droite s'étendant radialement.

5. Pneumatique de véhicule selon la revendication 1, **caractérisé en ce que** l'inclinaison des crêtes (4) et des vallées (5) ne se modifie que faiblement par rapport à la radiale (R), jusqu'à une profondeur allant jusqu'à 30 % de la profondeur (t) sur les dessins.

6. Pneumatique de véhicule selon l'une quelconque des revendications 1 à 3, **caractérisé en ce que** les crêtes (4) et les vallées (5) d'une entaille (3) s'étendent, dans le fond de l'entaille (G), au moins suivant une direction pratiquement radiale (R).

7. Pneumatique de véhicule selon la revendication 1 ou la revendication 2, **caractérisé en ce que** l'angle (βₚ), que les crêtes (4) et les vallées (5) forment avec la radiale (R) au niveau de la surface des éléments de sculpture, est compris entre 30° et 80°, en particulier entre 45° et 65°.

8. Pneumatique de véhicule selon l'une quelconque des revendications 1 à 4, **caractérisé en ce que** les entailles (3) vont jusqu'à une profondeur (T) qui correspond au moins à une profondeur (t) sur les dessins [= profondeur maximum des rainures circonférentielles (6)].

9. Pneumatique de véhicule selon l'une quelconque des revendications 1 à 4, **caractérisé en ce que** les entailles (3) vont au moins jusqu'à une profondeur qui correspond à 80 % de la profondeur (t) sur les dessins.

10. Pneumatique de véhicule selon l'une quelconque des revendications 1 à 6, **caractérisé en ce que** les extrémités enveloppantes des entailles (3) s'étendent à peu près en direction radiale (R).

11. Lamelle (11) à introduire dans un moule de vulcanisation pour la fabrication d'un pneumatique de véhicule (1) selon la revendication 1,
a) où la lamelle (11), sur la vue de dessus, est en forme de zigzag ou d'onde sur sa face frontale (12) tournée vers le pneumatique (1) à fabriquer,
b) où les arêtes coudées ou les lignes de courbure maximum, sur la vue de face perpendiculaire au profil principal de la lamelle (11), apparaissent de façon alternée comme des crêtes (4₁₁) et des vallées (5₁₁),
c) où ces crêtes (4₁₁) et ces vallées (5₁₁), sur la vue de face de la lamelle (11), sont inclinées suivant un angle (β) par rapport à la hauteur (H) et vont de façon ininterrompue et linéaire depuis la face (12) de la lamelle (11), tournée vers l'ébauche du pneumatique, jusqu'à l'emplanture (13) de la lamelle (11),
**caractérisée,**
d) en ce que toutes lesdites crêtes (4₁₁) et toutes les vallées (5₁₁), sur la vue de face, s'étendent en étant courbées de manière uniforme,
e) où chaque crête (4₁₁) est courbée exactement comme toutes les autres crêtes (4₁₁) et chaque vallée (5₁₁) est courbée exactement comme toutes les autres vallées (5₁₁),
f) où toutes les crêtes (4₁₁) et toutes les vallées (5₁₁) s'étendent en étant courbées de manière telle, que l'angle (βₚ), par rapport à la hauteur (H) au niveau de l'emplanture (13) de la lamelle (11), est plus grand que l'angle (β_{g}) au niveau de la face (12) de la lamelle (11), tournée vers l'ébauche du pneumatique.

12. Lamelle (11) selon la revendication 11, servant à la fabrication d'un pneumatique de véhicule selon la revendication 2, **caractérisée en ce que**, sur la vue latérale, toutes ses crêtes (4₁₁) et toutes ses vallées (5₁₁) apparaissent à chaque fois comme une ligne droite.

13. Lamelle (11) selon la revendication 12, servant à la fabrication d'un pneumatique de véhicule selon la revendication 3, **caractérisée en ce que**, sur la vue latérale, toutes ses crêtes (4₁₁) apparaissent comme une unique ligne droite commune, et toutes ses vallées (5₁₁) apparaissent également comme une autre unique ligne droite commune.

14. Lamelle (11) selon la revendication 12, de préférence selon la revendication 13, **caractérisée en ce que** ses crêtes (4₁₁), sur la vue latérale, apparaissent comme des lignes droites s'étendant le long de la hauteur (H) ou, de préférence, comme une unique ligne droite s'étendant le long de la hauteur (H), et **en ce que** ses vallées (5₁₁), sur la vue latérale, apparaissent comme des lignes droites s'étendant le long de la hauteur (H) ou, de préférence, comme une autre unique ligne droite s'étendant le long de la hauteur (H).

15. Moule de vulcanisation comprenant des lamelles (11) selon la revendication 11, **caractérisé en ce que** les lamelles (11) sont ancrées dans le moule de vulcanisation de manière telle, que leur hauteur (H) correspond à peu près à la radiale (R) du moule de vulcanisation, et la direction du regard vers la vue latérale de la lamelle (11) correspond pratiquement à la direction axiale du moule de vulcanisation.
